# EUROPÄISCHE PATENTANMELDUNG

(11) **EP 2 874 030 A1**
(43) Veröffentlichungstag der Anmeldung: **20.05.2015**
(21) Anmeldenummer: 13005422.4
(22) Anmeldetag: 19.11.2013
(51) Int. Cl.: G05B 19/042, G05B 19/05, G05B 19/418

(54) **Automatisierungssystem**

(71) Anmelder: Siemens Aktiengesellschaft, 80333 München (DE)
(72) Erfinder: Volevach, Vitaliy, 90419 Nürnberg (DE)

(57) **Zusammenfassung**

Die vorliegende Erfindung betrifft ein Automatisierungssystem, umfassend:
- eine erste und eine zweite Steuereinheit zur Steuerung eines Geräts oder einer Anlage sowie eine erste und eine zweites Ein- und/oder Ausgabe-Einheit zum Empfang eines elektronischen Signals von dem Gerät bzw. der Anlage und/oder zur Ausgabe eines elektronischen Signals an das Gerät bzw. die Anlage, und
- ein Steuerprogramm, umfassenden mehrere Steuerprogrammbausteine, zur Steuerung des Geräts oder der Anlage,
wobei,
- das Automatisierungssystem weiterhin derart ausgebildet und eingerichtet ist, dass jede der zweit Steuereinheiten sowohl mit der ersten als auch mit der zweiten Ein- und/oder Ausgabeeinheit elektronische Daten zur Steuerung des Geräts oder der Anlage austauschen kann, und
- das Automatisierungssystem weiterhin eine übergeordnete Steuereinheit umfasst, welche die Steuerprogrammbausteine der ersten und/oder zweiten Steuereinheit derart zuordnet, dass beim Ablauf der Steuerprogrammbausteine innerhalb der jeweiligen Steuereinheiten das Gerät oder die Anlage entsprechend dem Steuerprogramm gesteuert wird oder steuerbar ist.

## Beschreibung

Die vorliegende Erfindung beschreibt ein Automatisierungssystem mit einer ersten und einer zweiten Steuereinheit sowie einer ersten und zweiten Ein- und/oder Ausgabe-Einheit zur Steuerung eines Geräts oder einer Anlage.

Es ist ein Nachteil bestehender Automatisierungssysteme, dass beim Ausfall einer Steuerung entweder das Gesamte Steuerungssystem so lange ausfällt, bis die ausgefallene Steuerung ersetzt ist oder beispielsweise zu jedem Element des Automatisierungssystems eine redundantes vorgehalten werden muss, um beim Ausfall eines der Komponenten eine Funktionalität des Gesamtsystems gewährleisten zu können.

Daher ist es eine Aufgabe der vorliegenden Erfindung, ein Automatisierungssystem zur Verfügung zu stellen, welches flexibler, einfacher und/oder besser auf Änderungen innerhalb des Automatisierungssystems reagieren kann.

Diese Aufgabe wird gelöst durch ein Automatisierungssystem, eine übergeordnete Steuerung oder ein Verfahren gemäß den vorliegenden Patentansprüchen.

Durch die Zuordnung der einzelnen Steuerprogrammbausteine, aus welchen das Steuerprogramm zur Steuerung der gesamten Anlage zusammengesetzt ist, auf verschiedene Steuereinheiten des Automatisierungssystems ist es möglich, flexibel auf entsprechende Änderungen bei den Steuereinheiten oder auch bei den Ein- und/oder Ausgabe-Einheiten zu reagieren.

Dabei kann die erste und/oder die zweite Steuereinheit beispielsweise als ein Computer, ein Modul einer Speicherprogrammierbaren Steuerung oder einer Speicherprogrammierbaren Steuerung ("SPS" oder "PLC") selbst entsprechen. Weiterhin kann die erste und/oder zweite Ein- und/oder Ausgabe-Einheit beispielsweise als Eingabe- und/oder Ausgabe-Karte für einen Computer oder Ähnliches, ein Ein- und/oder Ausgabemodul für eine Speicher programmierbare Steuerung oder vergleichbare Module oder Geräte ausgebildet und eingerichtet sein.

Das Automatisierungssystem kann weiterhin auch mehr als zwei Steuereinheiten und/oder Ein- und/oder Ausgabe-Einheiten umfassen, wobei diese jeweils gemäß der in der vorliegenden Beschreibung dargestellten Einheiten ausgebildet und eingerichtet sein können.

Die von der Ein- und/oder Ausgabeeinheit ausgegebenen Signale können beispielsweise zur Steuerung eines oder mehrerer Aktoren des gesteuerten Geräts beziehungsweise der gesteuerten Anlage vorgesehen und dafür eingerichtet sein. Die empfangenen elektronischen Signale können beispielsweise von entsprechenden Sensoren oder auch Aktoren des gesteuerten beziehungsweise der gesteuerten Anlage für die Steuereinheit vorgesehen und eingerichtet sein.

Dabei können die elektronischen Signale beispielsweise analoge Spannungs- oder Stromsignale, analoge Signalfolgen oder auch digitale Signale oder Signalfolgen sein beziehungsweise aus derartigen Signalen bestehen.

Die übergeordnete Steuereinheit kann beispielsweise als ein Computer oder auch eine Steuereinheit oder auch eine Speicherprogrammierbare Steuerung oder Ähnliches ausgebildet und eingerichtet sein.

Die Zuordnung der Steuerprogrammbausteine zu den Steuereinheiten kann beispielsweise durch eine Übertragung der Steuerprogrammbausteine von der übergeordneten Steuereinheit an die jeweiligen Steuereinheiten erfolgen. Weiterhin kann die Zuordnung auch durch eine Information über die von den jeweiligen Steuereinheiten auszuführenden Steuerprogrammbausteine bestehen. Dabei kann beispielsweise vorgesehen sein, dass die jeweiligen Steuereinheiten bereits alle oder mehrere der Steuerprogrammbausteine gespeichert haben, und durch die übergeordnete Steuereinheit die Information erhalten, welche der Steuerprorammbausteine durch sie ausgeführt werden sollen.

Eine übergeordnete Steuereinheit kann beispielsweise als ein System ausgebildet sein, welches dynamisch Steuerprogramme an angeschlossene Steuereinheiten verteilt und/oder ein oder mehrere Steuerprogramm bzw. -bausteine an entsprechende Steuereinheiten anpasst, z.B. in entsprechende Bausteine zerlegt, und/oder auch eine korrekte Adressierung entsprechender Ein- und/oder Ausgabekanäle übernimmt.

Entsprechende Änderungen des Automatisierungssystems können beispielsweise ein Wegfall und/oder ein Hinzukommen von Steuereinheiten und/oder Ein- und /oder Ausgabe-Einheiten oder Baugruppen sein. Weiterhin können Änderungen des Automatisierungssystems auch in einer Änderung von Kommunikationsverbindungen, Kommunikationsmodulen und ähnlichen Modulen oder Elementen des Automatisierungssystems bestehen beziehungsweise solche Änderungen umfassen.

Eine Verschlechterung einer Steuerung durch eine Änderung des Automatisierungssystems kann beispielsweise eine langsamere Ausführung, eine ungenauere Ausführung und/oder eine unsicherere oder fehlerhaftere Ausführung des Steuerprogramms umfassen beziehungsweise aus einer solchen bestehen. Eine Steuerung des zu steuernden Geräts beziehungsweise der zu steuernden Anlage kann dann beispielsweise unmöglich werden, wenn eine der beteiligten Steuereinheiten beispielsweise ausfällt. In solch einem Fall kann dann die übergeordnete Steuereinheit beispielsweise die Steuerprogrammbausteine auf die noch zu funktionierenden Steuereinheiten neu verteilen.

Die Überprüfung der Zuordnung der Steuerprogrammbausteine kann beispielsweise daraufhin erfolgen, ob der Ablauf des gesamten Steuerprogramms nach einer Änderung des Automatisierungssystems langsamer, unsicherer, fehlerhafter, unmöglich oder ähnlich negativ-funktionaler wird.

Die vorliegende Erfindung kann beispielsweise helfen, beim Ausfall einer Speicherprogrammierbaren Steuerung im laufenden Betrieb durch einen Hardwaredefekt oder eines anderen Problems beispielsweise einfacher, preiswerter und/oder schneller als aus dem Stand der Technik bekannt, eine Funktionalität erhalten oder wieder herstellen.

Vorteilhafter Weise können dabei die Stromversorgungen zu den einzelnen Ein- oder Ausgabe-Baugruppen weiterhin erhalten sein.

Dabei kann bisher beispielsweise eine Anlage gemäß dem Stand der Technik erst dann wieder in Betrieb genommen werden, nachdem eine ausgefallene Komponente ausgetauscht und komplett wieder eingerichtet worden ist. Alternativ können zu einzelnen Zentraleinheiten beispielsweise für Speicherprogrammierbare Steuerungen gemäß dem Stand der Technik jeweils redundante beziehungsweise hoch verfügbare Ersatz-Zentraleinheiten vorgesehen sein, welche synchron zur ersten laufen und im Störfall deren Aufgabe übernehmen. Dies ist allerdings sehr teuer und aufwändig, da quasi die gesamte Hardware gedoppelt werden muss.

Die vorliegende Erfindung löst diese Problematik durch Einsatz der übergeordneten Steuereinheit gemäß der vorliegenden Beschreibung. In einer vorteilhaften Ausgestaltung kann bei Verwendung von Speicherprogrammierbaren Steuerungen jede der Speicherprogrammierbaren Steuerungen innerhalb des Automatisierungssystems jede der Eingabe- und/oder Ausgabe-Einheit der Anlage ansteuern.

Für den Fall, dass die Eingabe-Ausgabe-Einheiten an einer oder mehrerer der Speicherprogrammierbaren Steuerungen angehängt sind, können diese für andere Speicherprogrammierbare Steuerungen innerhalb eines Netzwerks (z.B. ProfiNet oder ProfiBus) sichtbar und/oder ansprechbar sind beziehungsweise sein. Dies kann beispielsweise durch eine Erweiterung der Funktionalität der Speicherprogrammierbaren Steuerungen (beispielsweise durch Verwendung spezieller Kommunikations-Controler) oder auch durch einen direkten Anschluss von Eingabe-Ausgabe-Baugruppen an ein Netzwerk (z.B. mit jeweils einem eigenständigen Controller) erreicht werden.

Vorteilhafter Weise bekommen alle physischen Ein- und/oder Ausgänge eine eindeutige Adresse zugewiesen. Diese Adresszuweisung kann beispielsweise durch ein Engineering-System erfolgen oder auch durch die übergeordnete Steuereinheit.

Dabei ist das Automatisierungssystem vorteilhafter Weise derart ausgestaltet und eingerichtet, dass verschiedene Ein- und/oder Ausgänge einer Eingabe-Ausgabe-Einheit von verschiedenen der Steuereinheiten beziehungsweise Speicher programmierbaren Steuerungen geschrieben beziehungsweise gelesen werden können.

Die übergeordnete Steuereinheit "kennt" z.B. alle Programme, Programmbausteine und/oder Steuerprogrammbausteine einer Anlage und kann sie auf die vorhandenen Steuereinheiten beziehungsweise Speicher programmierbaren Steuerungen dynamisch verteilen, z.B. unter anderem auch die Speichereinheiten beziehungsweise Speicher programmierbaren Steuerungen programmieren. Dabei wird die Gesamtheit der Programme, Programmbausteine oder Steuerprogrammbausteine im Rahmen der vorliegenden Beschreibung als "das Steuerprogramm" zur Steuerung des Geräts beziehungsweise der Anlage bezeichnet.

Die übergeordnete Steuerung kann auch die Anpassung der Adressierung in einem Programm beziehungsweise entsprechenden Programmbaustein oder Steuerprogrammbaustein übernehmen, so dass beispielsweise unabhängig von der ausführenden Steuereinheit beziehungsweise Speicherprogrammieren Steuerung stets die richtige Eingabe-Ausgabe-Einheit oder Baugruppe angesprochen wird. Bei einer Programmänderung oder einem Ausfall einer Steuereinheit beziehungsweise einer Speicherprogrammierbaren Steuerung beziehungsweise eines entsprechenden Steuermoduls kann die übergeordnete Steuereinheit dann eine dynamische Umverteilung der entsprechenden Programme, Programmbausteine oder Steuerprogrammbausteine vornehmen.

Dabei kann die übergeordnete Steuerung beispielsweise eine Optimierungsroutine oder ein Optimierungsprogramm oder ein Optimierungsmodul umfassen, mit welcher eine Aufteilung der entsprechenden Programmbausteine ermittelt wird, welche beispielsweise eine gleichmäßige Auslastung der Steuerungen anstrebt. Weiterhin kann eine solche Optimierungsroutine beziehungsweise ein entsprechendes Modul derart ausgebildet sein, dass dabei vorgegebene Zykluszeiten eingehalten werden.

Mit der vorliegenden Erfindung wird beispielsweise also nicht mehr wie im Stand der Technik eine einzelne Steuereinheit oder Speicher programmierbare Steuerung beziehungsweise CPU-Modul eines Automatisierungssystems programmiert, sondern im Prinzip ein Verbund von Steuereinheiten. Eine Zuteilung von Programmen oder Programmbausteinen zu den einzelnen Steuereinheiten oder Speicherprogrammierbaren Steuerungen beziehungsweise Zentral-Modulen wird dann durch die übergeordnete Steuereinheit beispielsweise durch einen in dieser vorgesehenen entsprechenden optimierenden Algorithmus übernommen.

Dabei ergeben sich beispielsweise unter Anderem ein oder mehrere der folgenden Vorteile:
- Eine Aufrüstbarkeit bestehender Automatisierungslösungen bei Beibehaltung der ursprünglichen räumlichen Konfiguration der Steuerungen;
- Gleichmäßigere Programmlastverteilung auf alle für eine Anlage vernetzten Steuereinheiten beziehungsweise Speicher programmierbaren Steuerungen;
- Dynamische Möglichkeit einer Leistungserweiterung einer Anlage durch Hinzunahme weiterer Steuereinheiten oder Steuermodule ohne Notwendigkeit eines Upgradens der bestehenden Steuerungen;
- N1-Sicherheit der CPU eines Verbundsystems aus Speicher programmierbaren Steuerungen. Das heißt, dass beim Ausfall einer Steuereinheit beziehungsweise eines Zentral-Moduls einer Speicher programmierbaren Steuerung die Anlage weiter im Betriebszustand ist, ohne für jede Steuereinheit beziehungsweise jedes Zentralmodul einzeln eine Reserve bereit halten zu müssen.

Weitere vorteilhafte Ausgestaltungen ergeben sich aus den Unteransprüchen.

Nachfolgend wird die Erfindung beispielhaft mit Bezug auf die beigefügten Zeichnungen näher erläutert.

Es zeigen:
Fig. 1: Beispiel für eine Automatisierungssystem zur Steuerung einer Anlage;
Fig. 2: Das Automatisierungssystem gemäß Fig. 1 nach dem Ausfall einer Steuerung.

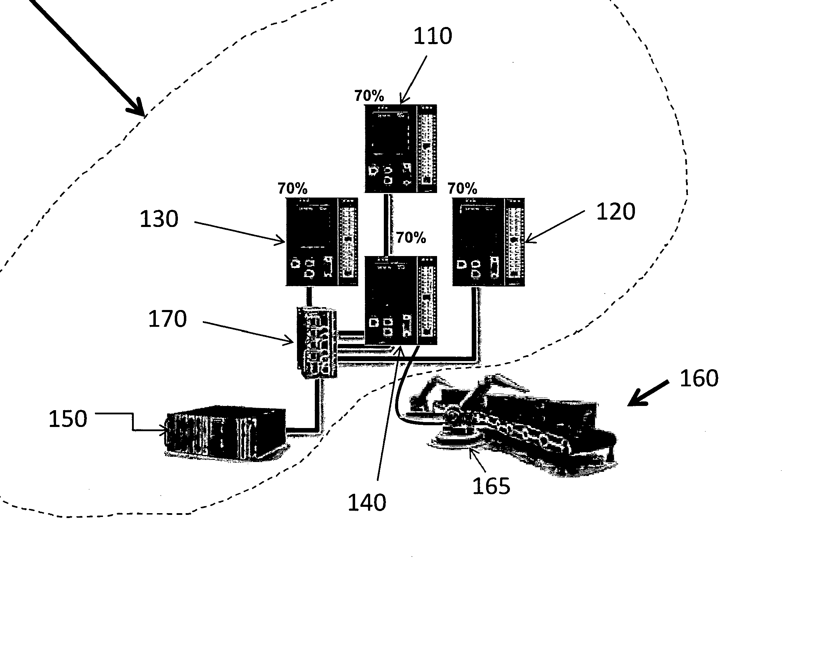

Fig. 1 zeigt ein Automatisierungssystem 100, welches aus vier Speicher programmierbaren Steuerungen 110, 120, 130, 140 besteht. Dabei umfasst jede der Speicher programmierbaren Steuerungen (PLC) 110, 120, 130, 140 eine Zentraleinheit und ein Ein-Ausgabe-Modul. Die Speicher programmierbaren Steuerungen 110, 120, 130, 140 sind jeweils über einen Netzknoten 170 untereinander und mit einem so genannten "Dispatcher" 150 verbunden. Der Dispatcher ist dabei ein Beispiel für eine über geordnete Steuereinheit gemäß der vorliegenden Beschreibung.

Die Ein-Ausgabe-Baugruppe der in Fig. 1 unteren PLC 140 ist mit einem Roboter 165 einer gesteuerten Anlage 160 verbunden. Dabei erfolgt die Steuerung des Roboters 165 über entsprechende Ein- und Ausgabe-Signalisierung der Ein-Ausgabe-Baugruppe der unteren PLC 140.

Zur Steuerung der Anlage 160 sind verschiedene Programmbausteine vorgesehen, die vom Dispatcher 150 auf die PLCs 110, 120, 130, 140 so übertragen und zugeordnet werden, dass jede der PLCs 110, 120, 130, 140 zu ungefähr 70% ihrer Leistungsfähigkeit ausgelastet sind.

Dabei sind die PLCs 110, 120, 130, 140 derart ausgestaltet, dass über die in Fig. 1 dargestellten Kommunikationsverbindungen jede der PLCs auch auf jeder der Ein-Ausgabe-Baugruppen der anderen PLCs zugreifen kann. Dies kann beispielsweise dadurch erfolgen, dass jede der PLCs 110, 120, 130, 140 ein Kommunikationsmodul umfasst, welches auch einen unmittelbaren Zugriff auf die Eingabe-Ausgabe-Baugruppe dieser PLC durch die entsprechende Kommunikationsverbindung erlaubt. Alternativ können beispielsweise auch die Ein-Ausgabe-Baugruppen mit einem entsprechenden Kommunikationsmodul oder Baustein ausgerüstet sein.

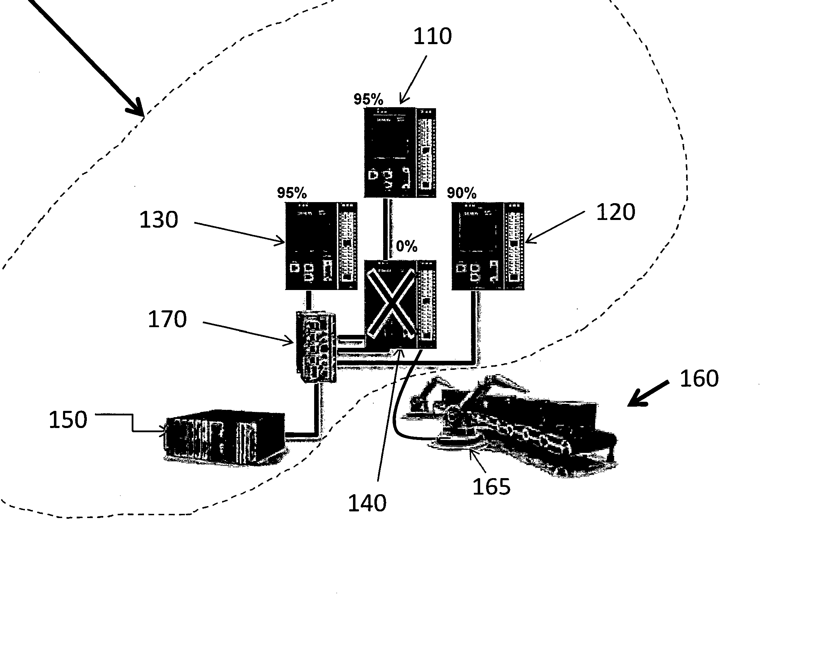

Fig. 2 zeigt das Automatisierungssystem 100 mit der daran angeschlossenen Anlage 160 nach dem Ausfall der unteren PLC 140. Nach einer Feststellung dieses Ausfalls durch den Dispatcher 150 beziehungsweise einer entsprechenden Information an den Dispatcher 150 übernimmt der Dispatcher eine Neuverteilung aller für die Steuerung der Anlage 160 notwendigen Prorammbausteine auf die verbleibenden funktionierenden PLCs 110, 120, 130. Dabei ermittelt der Dispatcher 150 eine Programmverteilung derart, dass keine der angeschlossenen, noch funktionierenden PLCs 110, 120, 130 überlastet wird. So ergibt sich beispielweise im vorliegenden Beispiel eine Neuverteilung der notwendigen Programmbausteine durch den Dispatcher 150 derart, dass zwei der PLCs 110, 130, zu 95% ausgelastet sind und die dritte, 120, zu 90%.

Der Roboter 165 wird weiterhin über die Eingabe-Ausgabe-Baugruppe der defekten PLC 140 angesteuert, wobei die Signale an diese Eingabe-Ausgabe-Baugruppe von denjenigen der verbleibenden PLCs 110, 120, 130 an diese Eingabe-Ausgabe-Baugruppe übermittelt werden, welche nun entsprechende Programmbausteine zur Steuerung des Roboters 165 umfassen.

## Patentansprüche

1. Automatisierungssystem, umfassend:
- eine erste und eine zweite Steuereinheit zur Steuerung eines Geräts oder einer Anlage sowie eine erste und eine zweites Ein- und/oder Ausgabe-Einheit zum Empfang eines elektronischen Signals von dem Gerät bzw. der Anlage und/oder zur Ausgabe eines elektronischen Signals an das Gerät bzw. die Anlage, und
- ein Steuerprogramm, umfassenden mehrere Steuerprogrammbausteine, zur Steuerung des Geräts oder der Anlage, **dadurch gekennzeichnet,**
- **dass** das Automatisierungssystem weiterhin derart ausgebildet und eingerichtet ist, dass jede der zweit Steuereinheiten sowohl mit der ersten als auch mit der zweiten Ein- und/oder Ausgabeeinheit elektronische Daten zur Steuerung des Geräts oder der Anlage austauschen kann, und
- **dass** das Automatisierungssystem weiterhin eine übergeordnete Steuereinheit umfasst, welche die Steuerprogrammbausteine der ersten und/oder zweiten Steuereinheit derart zuordnet, dass beim Ablauf der Steuerprogrammbausteine innerhalb der jeweiligen Steuereinheiten das Gerät oder die Anlage entsprechend dem Steuerprogramm gesteuert wird oder steuerbar ist.

2. Automatisierungssystem gemäß Anspruch 1
**dadurch gekennzeichnet,**
**dass** den Ein- und/oder Ausgabe-Einheiten jeweils ein Kommunikationsmodul zur Kommunikation mit der ersten und/oder zweiten Steuereinheit zugeordnet ist.

3. Automatisierungssystem gemäß Anspruch 1 oder 2
**dadurch gekennzeichnet,**
**dass** die übergeordnete Steuereinheit derart ausgebildet und eingerichtet ist, dass die Zuordnung der Steuerprogrammbausteine zur ersten und zweiten Steuereinheit bei einer Änderung des Automatisierungssystems überprüft wird.

4. Automatisierungssystem gemäß Anspruch 3
**dadurch gekennzeichnet,**
**dass** die übergeordnete Steuereinheit derart ausgebildet und eingerichtet ist, dass die Zuordnung der Steuerprogrammbausteine zur ersten und zweiten Steuereinheit bei einer Änderung des Automatisierungssystems nach der Überprüfung geändert wird,
insbesondere dann geändert wird, wenn die Überprüfung ergibt, dass die Steuerung des Geräts oder der Anlage durch die Änderung des Automatisierungssystem bei der bestehenden Zuordnung der Steuerprogrammbausteine verschlechtert oder unmöglich wird.

5. Verfahren zum Betrieb eines Automatisierungssystems gemäß einem der vorstehenden Ansprüche,
**gekennzeichnet durch** die Schritte:
- Zuordnung der Steuerprogrammbausteine zur ersten und/oder zweiten Steuereinheit **durch** die übergeordnete Steuereinheit;
- Ablauf der Steuerprogrammbausteine innerhalb der ersten und/oder zweiten Steuereinheit derart, dass das **durch** das Automatisierungssystem zu steuerende Gerät oder die zu steuerende Anlage gemäß dem Steuerprogramm gesteuert wird.

6. Verfahren gemäß Anspruch 5,
**dadurch gekennzeichnet, dass** die übergeordnete Steuereinheit bei einer Änderung des Automatisierungssystems die Zuordnung der Steuerprogrammbausteine zur ersten und zweiten Steuereinheit überprüft wird.

7. Verfahren gemäß Anspruch 6,
**dadurch gekennzeichnet, dass** die Zuordnung der Steuerprogrammbausteine zur ersten und zweiten Steuereinheit durch die übergeordnete Steuereinheit geändert wird, wenn die Überprüfung eine Nicht-Funktionalität oder eine verschlechterte Funktionalität der Steuerung des Geräts oder der Anlage gemäß dem Steuerprogramm durch die Änderung des Automatisierungssystems ergibt.

8. Übergeordnete Steuereinheit für ein Automatisierungssystem gemäß einem der Ansprüche 1 bis 4,
wobei die übergeordnete Steuereinheit gemäß einem der Ansprüche 1 bis 4 und das Automatisierungssystem gemäß einem der Ansprüche 1 bis 4 ausgebildet und eingerichtet ist.

9. Übergeordnete Steuereinheit gemäß Anspruch 8,
**dadurch gekennzeichnet,**
**dass** die übergeordnete Steuereinheit zur Durchführung eines Verfahrens gemäß einem der Ansprüche 5 bis 7 ausgebildet und eingerichtet ist.
